# EUROPEAN PATENT APPLICATION

(11) **EP 2 605 574 A1**
(43) Date of publication of application: **19.06.2013**
(21) Application number: 11816472.2
(22) Date of filing: 10.08.2011
(51) Int. Cl.: H04W 24/04, H04W 16/16

(54) **MOBILE DEVICE, NETWORK APPARATUS, WIRELESS COMMUNICATION SYSTEM AND CELL INFORMATION REPORTING METHOD**

(30) Priority: 11.08.2010 JP 2010180642
(71) Applicant: NTT DOCOMO, INC., Chiyoda-ku Tokyo 100-6150 (JP)
(72) Inventor: AOYAGI, Kenichiro, Tokyo 100-6150 (JP); NAKAMURA, Yuichiro, Tokyo 100-6150 (JP); SUGANO, Kiminobu, Tokyo 100-6150 (JP)
(74) Representative: HOFFMANN EITLE
(86) International application number: PCT/JP2011/068310
(87) International publication number: WO 2012/020808

(57) **Abstract**

Even when small cells formed by the Home Node B and the Home eNode B are concentrated, the Automatic Neighbor Relation (ANR) function is effectively performed. A mobile device 300 reports cell information including a setting status of a neighboring cell to an RNC 100 based on broadcasted system information received from the neighboring cell. The mobile device 300 determines a neighboring cell to be reported to the RNC 100 based on report-target cell information including at least a type of a neighboring cell to be reported to the RNC 100, and reports the cell information to the RNC 100 based on the broadcasted system information received from the neighboring cell thus determined.

## Description

### TECHNICAL FIELD

The present invention relates to a mobile device, a network apparatus, and a radio communication system that operates in accordance with Automatic Neighbor Relation (ANR), and also relates to a cell information reporting method.

### BACKGROUND ART

In recent years, there has been known a method in which an apparatus configuring a radio communication network performs setting autonomously by itself based on its environment such as a network configuration, and thus automatically sets optimum parameters and the like. With such a method, man-hours for network designing and the like can be reduced.

For example, in Automatic Neighbor Relation (ANR) specified by 3GPP TS32.511, in order for a communication network, such as an RNC, to generate or update a neighboring cell information table (Neighbor Relation Table: NRT), the communication network causes a mobile device to acquire broadcasted system information (e.g., a Primary Scrambling Code or a Physical Cell Identity) from a target cell. Then, to the communication network, the mobile device reports a predetermined information element included in the broadcasted system information acquired.

### PRIOR ART DOCUMENT

### NON-PATENT DOCUMENT

Non-patent Document 1: 3GPP TS 32.511, Technical Specification Group Services and System Aspects; Telecommunication management; Automatic Neighbor Relation (ANR) management; Concepts and requirements

### SUMMARY OF THE INVENTION

However, the conventional generation and update of the neighboring cell information table described above has the following problem.

Specifically, the neighboring cell information table is defined in consideration of collecting the broadcasted system information from macro cells. Accordingly, in an area concentratedly having small cells, such as a Home Node B and a Home eNode B, which can be freely established by users, the mobile device might detect too many pieces of broadcasted system information. It is possible to exclude certain cells from report targets by using a Neighboring Cell List or a Black List. However, since this requires the network to know in advance information on the report-target cells such as their Primary Scrambling Codes and the Physical Cell Identities, it is difficult to apply this to the Home Node B or Home eNode B, such information of which the network cannot know in advance.

For this reason, when the mobile device acquires too many broadcasted system information pieces to run short of storage space or to have increased processing load, the generation and update of the neighboring cell information table might not be performed properly. As a result, there arises a problem that the ANR function cannot be effectively performed.

In view of this, the present invention has an objective of providing a mobile device, a network device, a radio communication system, and a cell information reporting method, with which even when small cells formed by the Home Node B and the Home eNode B are concentrated, the Automatic Neighbor Relation (ANR) function can be effectively performed.

An aspect of the present invention is summarized as a mobile device (the mobile device 300) configured to report cell information including a setting status of a neighboring cell to a communication network (the communication network 150) based on broadcasted system information received from the neighboring cell. The mobile device determines a neighboring cell to be reported to the communication network, based on report-target cell information including at least a type of a neighboring cell to be reported to the communication network, and reports the cell information to the communication network based on the broadcasted system information received from the neighboring cell.

In the above aspect of the present invention, the report-target cell information may include a report priority level associated with a report-target neighboring cell, and based on the report priority level, the mobile device may determine the neighboring cell to be reported to the communication network.

In the above aspect of the present invention, to the communication network, the mobile device may report the cell information only on a neighboring cell the report priority level of which is specified as being at or above a predetermined priority level.

Another aspect of the present invention is summarized as a network apparatus (the RNC 100) used in a communication network configured to acquire cell information on a neighboring cell of a mobile device, the cell information being reported by the mobile device and including a setting status of the neighboring cell, and to generate or update a neighboring cell information table based on the cell information acquired. The network apparatus sends the mobile device report-target cell information including at least a type of a neighboring cell to be reported by the mobile device.

In the above aspect of the present invention, the report-target cell information may include a report priority level associated with a report-target neighboring cell, and the network apparatus may send the mobile device the report-target cell information including the report priority level.

Another aspect of the present invention is summarized as a radio communication system comprising: a mobile device configured to report cell information including a setting status of a neighboring cell to a communication network based on broadcasted system information received from the neighboring cell; and a network apparatus used in the communication network configured to generate or update a neighboring cell information table based on the cell information acquired from the mobile device. In this radio communication system, the network apparatus sends the mobile device report-target cell information including at least a type of a neighboring cell to be reported to the communication network. Based on the report-target cell information, the mobile device determines a neighboring cell to be reported to the communication network, and the mobile device reports the cell information to the communication network based on broadcasted system information received from the neighboring cell.

Another aspect of the present invention is summarized as a cell information reporting method of reporting cell information including a setting status of a neighboring cell of a mobile device to a communication network based on broadcasted system information received from the neighboring cell, the method comprising the steps of: causing the mobile device to determine a neighboring cell to be reported to the communication network, based on report-target cell information including at least a type of a neighboring cell to be reported to the communication network; causing the mobile device to report the cell information on the neighboring cell thus determined, to the communication network based on the broadcasted system information received from that neighboring cell; and causing the network apparatus to generate or update a neighboring cell information table based on the cell information thus reported.

### BRIEF DESCRIPTION OF THE DRAWINGS

[Fig. 1] Fig. 1 is a diagram schematically showing the overall configuration of a radio communication system according to an embodiment of the present invention.
[Fig. 2] Fig. 2 is a diagram showing a functional block configuration of an RNC 100 according to the embodiment of the present invention.
[Fig. 3] Fig. 3 is a diagram showing a functional block configuration of a mobile device 300 according to the embodiment of the present invention.
[Fig. 4] Fig. 4 is a diagram showing the communication sequence of the radio communication system according to the embodiment of the present invention.
[Fig. 5] Fig. 5 is a diagram showing an example of report-target cell information according to the embodiment of the present invention.
[Fig. 6] Fig. 6 is a diagram showing an example of a neighboring cell information table according to the embodiment of the present invention.

### MODES FOR CARRYING OUT THE INVENTION

Next, an embodiment of the present invention is described. Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Overall schematic configuration of radio communication system

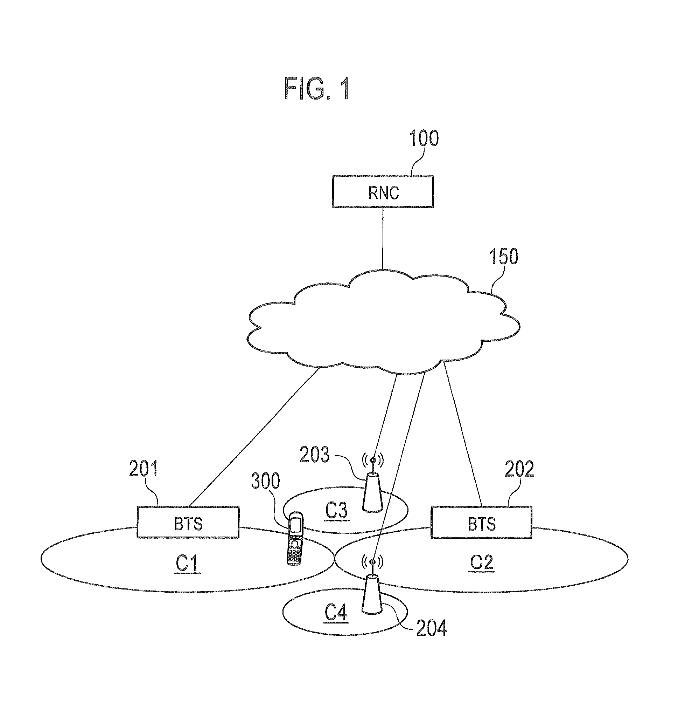

Fig. 1 is a diagram schematically showing the overall configuration of a radio communication system according to this embodiment. As shown in Fig. 1, the radio communication system according to this embodiment is configured with an RNC 100, a communication network 150, BTSs 201 to 204, and a mobile device 300. The radio communication system according to this embodiment conforms to the 3G (W-CDMA) scheme.

The RNC 100 is configured to perform communication with the BTSs 201 to 204 via the communication network 150. Moreover, the RNC 100 is configured to perform communication with the mobile device 300 via the communication network 150 and the BTSs 201 to 204.

Particularly, in this embodiment, the RNC 100 acquires cell information reported by the mobile device 300, the cell information including a setting status of a corresponding one of neighboring cells (cells C1 to C4) of the mobile device 300. Based on the cell information, the RNC 100 generates or updates a neighboring cell information table 500. In this embodiment, the RNC 100 configures a network apparatus used in the communication network 150.

The BTSs 201 to 204 perform radio communication with the mobile device 300. The BTS 201 and the BTS 202 are public base stations and form macro cells (cells C1 and C2). The BTS 203 is a small base station (Home Node B) having the functionality of the public base stations, and forms a small hybrid cell (cell C3) smaller than the macro cells. The BTS 204 is a small base station (Home Node B) available to limited users, and forms a CSG (Closed Subscriber Group) cell (the cell C4) smaller than the macro cells.

The mobile device 300 is configured to be able to receive broadcasted system information broadcasted by the BTSs 201 to 204 (the cells C1 to C4). The mobile device 300 is configured to report cell information on a neighboring cell (the cells C1 to C4) of the mobile device 300 to the communication network 150 (specifically, the RNC 100) based on the broadcasted system information received from the neighboring cell, the cell information including the setting status (e.g., the Primary Scrambling Code) of the neighboring cell.

Note that the neighboring cell is a cell that broadcasted system information from its BTS can be received by the mobile device 300.

### (2) Functional block configuration of radio communication system

Next, a description is given of the functional block configurations of main ones of the devices configuring the radio communication system described above.

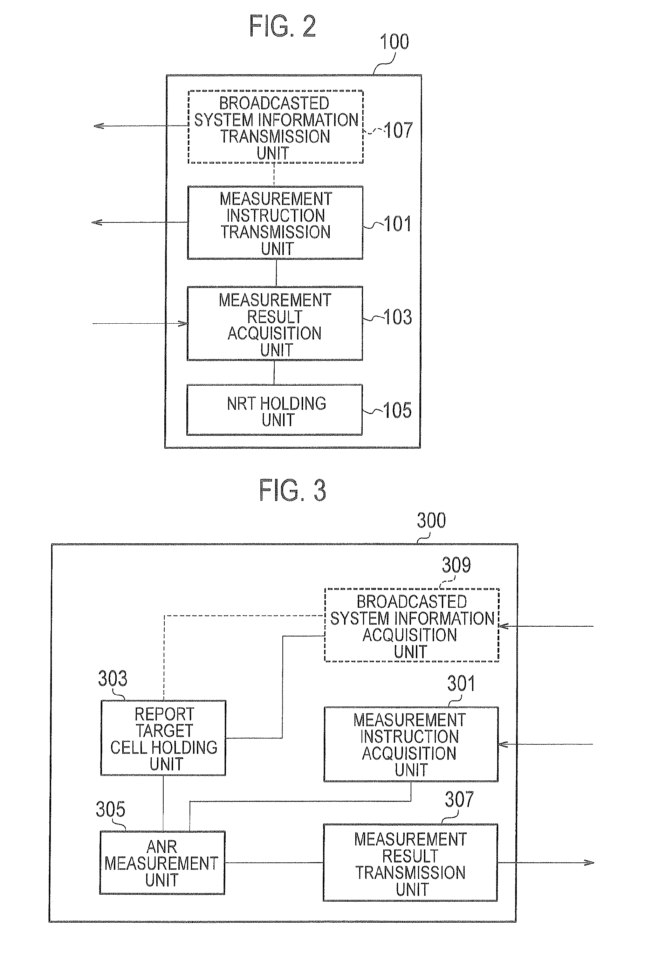

Fig. 2 is a diagram showing the functional block configuration of the RNC 100, and Fig. 3 is a diagram showing the functional block configuration of the mobile device 300.

### (2.1) RNC 100

As shown in Fig. 2, the RNC 100 includes a measurement instruction transmission unit 101, a measurement result acquisition unit 103, an NRT holding unit 105, and a broadcasted system information transmission unit 107.

The measurement instruction transmission unit 101 is configured to send a measurement instruction (RRC MEASUREMENT CONTROL) to the mobile device 300 via the BTS (e.g., the BTS 201 forming the cell C1 in which the mobile device 300 is located). The measurement instruction instructs the mobile device 300 to measure the broadcasted system information sent from the neighboring cells of the mobile device 300.

The measurement instruction transmission unit 101 can include report-target cell information in the measurement instruction. In other words, the measurement instruction transmission unit 101 sends the report-target cell information to the mobile device 300.

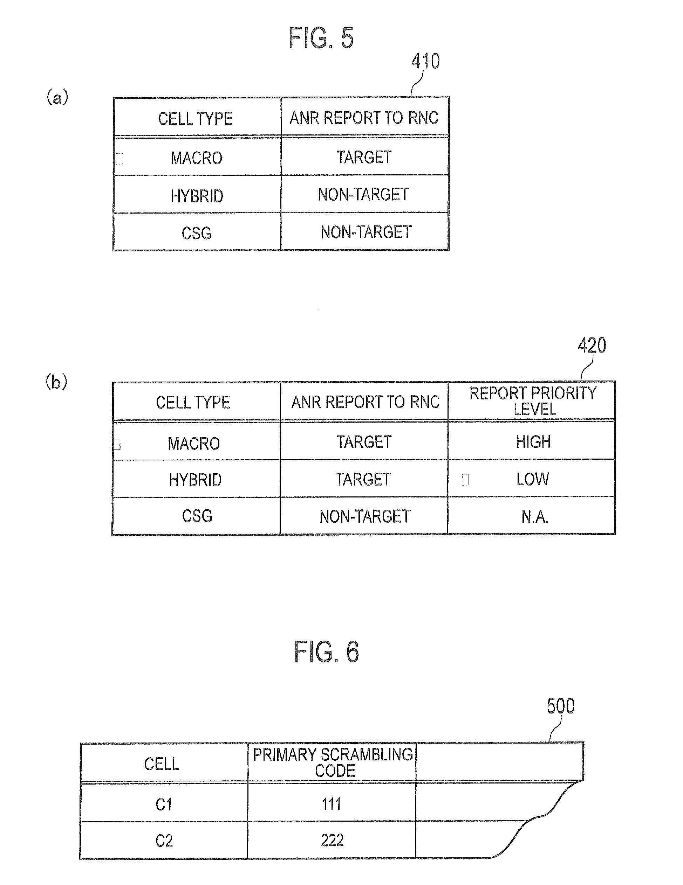

Report-target cell information 410 (see Fig. 5(a)) includes the type of the neighboring cell to be reported by the mobile device 300. The RNC 100 can also send the mobile device 300 report-target cell information 420 which includes report priority levels (see Fig. 5(b)).

The measurement result acquisition unit 103 is configured to acquire a result of measurement of the broadcasted system information, or specifically, the cell information (e.g., the Primary Scrambling Code) on the neighboring cell, sent from the mobile device 300.

The NRT holding unit 105 is configured to hold the neighboring cell information table 500 (NRT) generated based on Automatic Neighbor Relation (ANR) (see Fig. 6). Specifically, the NRT holding unit 105 is configured to generate or update the neighboring cell information table 500 based on the cell information on the neighboring cell acquired by the measurement result acquisition unit 103.

The broadcasted system information transmission unit 107 is configured to send various types of broadcasted system information to the mobile device 300. Especially, in this embodiment, the broadcasted system information transmission unit 107 sends the report-target cell information to the mobile device 300. Note that, if the report-target cell information is included in the measurement instruction described above, the broadcasted system information transmission unit 107 does not necessarily have to be provided.

### (2.2) Mobile Device 300

As shown in Fig. 3, the mobile device 300 includes a measurement instruction acquisition unit 301, a report-target cell holding unit 303, an ANR measurement unit 305, a measurement result transmission unit 307, and a broadcasted system information acquisition unit 309.

The measurement instruction acquisition unit 301 is configured to acquire the measurement instruction (RRC MEASUREMENT CONTROL) sent from the RNC 100.

The report-target cell holding unit 303 is configured to hold a cell whose cell information is to be reported to the communication network 150 (specifically, the RNC 100). Specifically, the report-target cell holding unit 303 is configured to hold the report-target cell information (see Figs. 5 (a) and 5(b)).

The ANR measurement unit 305 is configured to measure broadcasted system information sent from the neighboring cell of the mobile device 300, according to ANR. More specifically, the ANR measurement unit 305 determines the neighboring cell to be reported to the communication network 150, based on the report-target cell information held by the report-target cell holding unit 303, and measures the broadcasted system information received from the neighboring cell thus determined.

Note that the ANR measurement unit 305 can determine the neighboring cell to be reported to the communication network, based on the report priority levels included in the report-target cell information. For example, when a predetermined condition is satisfied, the ANR measurement unit 305 can report cell information on only the neighboring cell having a report priority level at or above a predetermined priority level (e.g., "high").

The measurement result transmission unit 307 is configured to send a certain information element included in the broadcasted system information from the neighboring cell measured by the ANR measurement unit 305, to the RNC 100 as cell information. In other words, based on the broadcasted system information received from the neighboring cell determined, the measurement result transmission unit 307 reports the cell information on that neighboring cell to the communication network 150.

The broadcasted system information acquisition unit 309 is configured to acquire broadcasted system information, or specifically, the report-target cell information, sent from the RNC 100 (the broadcasted system information transmission unit 107). The broadcasted system information acquisition unit 309 then causes the report-target cell holding unit 303 to hold the report-target cell information acquired. Note that, if the report-target cell information is included in the measurement instruction described above, the broadcasted system information acquisition unit 309 does not necessarily have to be provided.

### (3) Operation of radio communication system

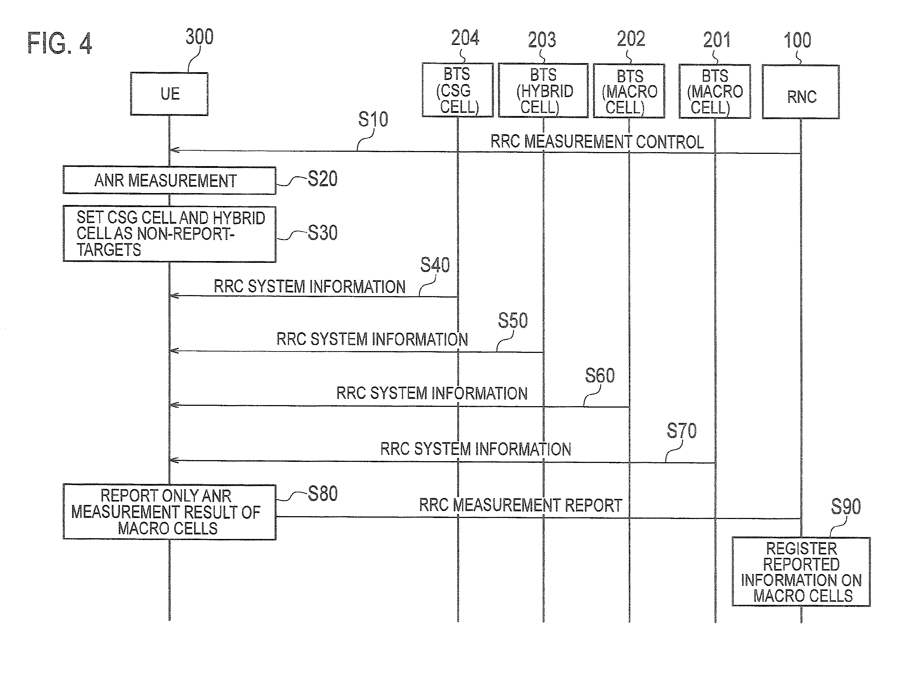

Next, with reference to Fig. 4, a description is given of the operation of the radio communication system described above. Fig. 4 shows a communication sequence of the radio communication system according to this embodiment.

As shown in Fig. 4, in Step S10, the RNC 100 sends the mobile device 300 a measurement instruction (RRC MEASUREMENT CONTROL) instructing the mobile device 300 to measure broadcasted system information sent from the neighboring cells of the mobile device 300.

As described earlier, the report-target cell information 410 or the report-target cell information 420 (see Figs. 5(a) and 5(b)) can be included in the measurement instruction.

In a case of the report-target cell information 410, only the macro cells (the cells C1 and C2) are designated as targets to be reported, and the hybrid cell (the cell C3) and the CSG cell (the cell C4) are not designated as the report targets.

Moreover, in a case of the report-target cell information 420, the report priority levels are added. The report priority level of the macro cells is "high," and the report priority level of the hybrid cell is "low." Accordingly, when a predetermined condition (e.g., a specific time zone or the processing load level of the RNC 100) is satisfied, the mobile device 300 can omit report of the cell information on the neighboring cell having a low priority level, namely, the hybrid cell in this case.

Here, assume that the RNC 100 sends the report-target cell information 410. For specification of the cell types, a CSG Identity or a CSG Indicator for specification of hybrid cells and CSG cells can be used. Alternatively, provider information such as PLMN-IDs or area identifiers of TA/LA/RA or the like may be used.

In Step S20, the mobile device 300 starts measuring the broadcasted system information sent from the neighboring cells, according to ANR.

In Step S30, the mobile device 300 sets the hybrid cell and the CSG cell as non-report-targets, based on the report-target cell information 410 acquired.

In Step S40, the BTS 204 sends broadcasted system information (RRC SYSTEM INFORMATION). The RRC SYSTEM INFORMATION includes information elements, such as a CSG indicator, a CSG ID, and a Cell identity, assigned to the cell C4 .

In Steps S50 to S70, the BTSs 201 to BTS 203 send broadcasted system information (RRC SYSTEM INFORMATION).

In Step S80, the mobile device 300 sends ANR measurement results of the macro cells (cells C1 and C2), or more specifically, information elements included in the broadcasted system information received from the BTS 201 and the BTS 202, to the RNC 100 as cell information. Specifically, the mobile device 300 sends the RNC 100 RRC MEASUREMENT REPORT which includes the information pieces.

In Step S90, the RNC 100 registers information on the macro cells (cells C1 and C2) reported by the mobile device 300, in the neighboring cell information table 500.

As shown in Fig. 6, only the information (such as the Primary Scrambling Code) on the macro cells (cells C1 and C2) are registered in the neighboring cell information table 500, and the information on the hybrid cell and the CSG cell are not registered therein. Note that the neighboring cell information table 500 may include information other than the Primary Scrambling Codes.

### (4) Advantageous effects

In the radio communication system according to this embodiment, the mobile device 300 determines a neighboring cell to be reported to the communication network 150, based on report-target cell information including at least the type of the neighboring cell to be reported to the communication network 150 (the RNC 100). Further, based on the broadcasted system information received from the neighboring cell determined, the mobile device 300 reports cell information on that neighboring cell to the communication network 150.

Accordingly, it is possible to freely specify a report-target cell. Thus, even when small cells formed by the Home Node B and the Home eNode B are concentrated, the Automatic Neighbor Relation (ANR) function can be effectively performed by freely limiting report-target cells.

As a result, redundant measurement and report by the mobile device 300 are suppressed, which can achieve reduction in the battery consumption by the mobile device 300 and reduction in the ANR-related processing load on the communication network 150 (RNC 100).

Further, in this embodiment, since the report priority levels can be included in the report-target cell information, specification of report-target cells can be done in more detail according to, for example, a condition such as processing load on the communication network 150.

### (5) Other embodiments

As described above, the details of the present invention have been disclosed by using the embodiment of the present invention. However, it should not be understood that the description and drawings which constitute part of this disclosure limit the present invention. From this disclosure, various alternative embodiments will be easily found by those skilled in the art.

For example, although the radio communication system in conformity with the 3C (W-CDMA) scheme is used as an example in the embodiment of the present invention, the present invention can of course be applied to other schemes such as LTE. In a case of LTE, the functionality of the RNC 100 may be included in any of the eNode Bs. As described above, the present invention naturally includes various embodiments which are not described herein. Accordingly, the technical scope of the present invention should be determined only by the matters to define the invention in the scope of claims regarded as appropriate based on the description.

This application claims the benefit of priority from Japanese Patent Application Publication No. 2010-180642 (filed on August 11, 2010), the contents of which are incorporated herein by reference.

### INDUSTRIAL APPLICABILITY

According to the aspects of the present invention, even when small cells formed by the Home Node B and the Home eNode B are concentrated, the Automatic Neighbor Relation (ANR) function can be effectively performed.

### EXPLANATION OF REFERENCE NUMERALS

| | |
|---|---|
| 100 | RNC |
| 101 | measurement instruction transmission unit |
| 103 | measurement result acquisition unit |
| 105 | NRT holding unit |
| 107 | broadcasted system information transmission unit |
| 150 | communication network |
| 201 to 204 | BTS |
| 300 | mobile device |
| 301 | measurement instruction acquisition unit |
| 303 | report-target cell holding unit |
| 305 | ANR measurement unit |
| 307 | measurement result transmission unit |
| 309 | broadcasted system information acquisition unit |
| 410, 420 | report-target cell information |
| 500 | neighboring cell information table |

## Claims

1. A mobile device configured to report cell information including a setting status of a neighboring cell to a communication network based on broadcasted system information received from the neighboring cell, wherein
the mobile device
determines a neighboring cell to be reported to the communication network, based on report-target cell information including at least a type of a neighboring cell to be reported to the communication network, and
reports the cell information to the communication network based on the broadcasted system information received from the neighboring cell thus determined.

2. The mobile device according to claim 1, wherein
the report-target cell information includes a report priority level associated with a report-target neighboring cell, and
based on the report priority level, the mobile device determines the neighboring cell to be reported to the communication network.

3. The mobile device according to claim 2, wherein
to the communication network, the mobile device reports the cell information only on a neighboring cell the report priority level of which is specified as being at or above a predetermined priority level.

4. A network apparatus used in a communication network configured to acquire cell information on a neighboring cell of a mobile device, the cell information being reported by the mobile device and including a setting status of the neighboring cell, and to generate or update a neighboring cell information table based on the cell information acquired, wherein
the network apparatus sends the mobile device report-target cell information including at least a type of a neighboring cell to be reported by the mobile device.

5. The network apparatus according to claim 4, wherein
the report-target cell information includes a report priority level associated with a report-target neighboring cell, and
the network apparatus sends the mobile device the report-target cell information including the report priority level.

6. A radio communication system comprising:
a mobile device configured to report cell information including a setting status of a neighboring cell to a communication network based on broadcasted system information received from the neighboring cell; and
a network apparatus used in the communication network configured to generate or update a neighboring cell information table based on the cell information acquired from the mobile device, wherein
the network apparatus sends the mobile device report-target cell information including at least a type of a neighboring cell to be reported to the communication network,
based on the report-target cell information, the mobile device determines a neighboring cell to be reported to the communication network, and
the mobile device reports the cell information to the communication network based on broadcasted system information received from the neighboring cell thus determined.

7. A cell information reporting method of reporting cell information including a setting status of a neighboring cell of a mobile device to a communication network based on broadcasted system information received from the neighboring cell, the method comprising the steps of:
causing the mobile device to determine a neighboring cell to be reported to the communication network, based on report-target cell information including at least a type of a neighboring cell to be reported to the communication network;
causing the mobile device to report the cell information, to the communication network based on the broadcasted system information received from the neighboring cell thus determined; and
causing the network apparatus to generate or update a neighboring cell information table based on the cell information thus reported.
